# EUROPEAN PATENT SPECIFICATION

(11) **EP 2 427 351 B1**
(45) Date of publication and mention of the grant of the patent: **13.11.2013**
(21) Application number: 10772259.7
(22) Date of filing: 06.05.2010
(51) Int. Cl.: B60R 21/21, B60R 21/20, B60R 21/16

(54) **SIDE AIRBAG UNIT FOR VEHICLE**
SEITENAIRBAGEINHEIT FÜR FAHRZEUGE
UNITÉ DE COUSSIN DE SÉCURITÉ GONFLABLE LATÉRAL POUR VÉHICULE

(30) Priority: 07.05.2009 KR 20090039763
(43) Date of publication of application: 14.03.2012
(73) Proprietor: Autoliv Development AB, 447 83 Vårgårda (SE)
(72) Inventor: LEE, Bum-Soo, Seoul 150-103 (KR)
(74) Representative: Müller, Karl-Ernst
(86) International application number: PCT/KR2010/002856
(87) International publication number: WO 2010/128799

(56) References cited:
- JP-A- 2001 151 059
- JP-A- 2002 104 119
- JP-A- 2009 040 260
- KR-B1- 100 286 984
- US-A1- 2004 012 179
- US-A1- 2005 098 990

## Description

### Technical Field

The present invention relates to a side airbag unit for vehicles, and more particularly, to an airbag unit that uses a blocking member to partially block a vent hole formed in an airbag member when the airbag member inflates, so as to control inflation and deflation of the airbag member.

### Background Art

Conventionally, vehicles include airbag units for protecting vehicle occupants in collisions. Airbag units include front airbag units and side airbag units. Front airbag units are installed in front of the driver's seat and front passenger seat. Side airbag units are installed at either side of the vehicle door.

Conventionally, airbag units include a gas generator and an airbag member. When vehicles collide with other vehicles or other objects, a collision detection sensor transmits a signal to an electron control unit (ECU) and the ECU operates the gas generator and thus the gas generator generates an inflation gas, thereby inflating the airbag member. In collisions, vehicle occupants may forcibly collide with interior structures. To reduce the resultant impacts, the airbag member needs to be deflated to a predetermined degree after being rapidly inflated by the inflation gas. That is because if the airbag member is not deflated, vehicle occupants may forcibly collide with the inflated airbag member and thus become injured by the inflated airbag member. The deflation of the airbag member is performed by discharging the inflation gas filled in the airbag member. To discharge the inflation gas, a vent hole is formed in the airbag member.

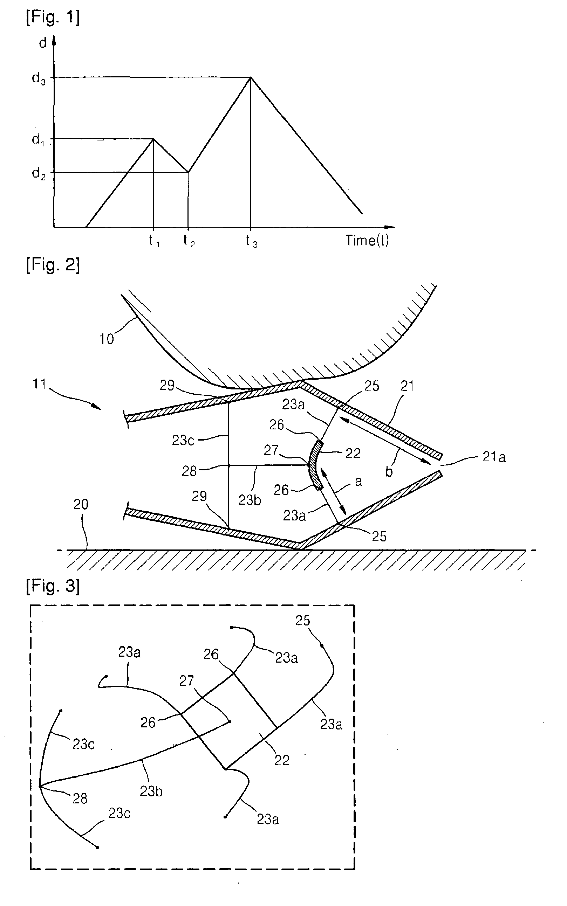

FIG. 1 is a graph showing results of a test performed using a conventional side airbag unit. In FIG. 1, the x-axis represents time and the y-axis represents a rib deformity degree when pressure is applied to a vehicle occupant. This test was performed using a dummy.

Referring to FIG. 1, an airbag member fully inflates at t1 and the dummy is pressed against the inflated airbag member and thus the rib deformity degree is increased to d1. Then, an inflation gas is discharged through a vent hole formed in the airbag member, and thus, the airbag member applies less pressure to the dummy, and thus at t2, the rib deformity degree is reduced to d2. After t2, the inflation gas continues to be discharged through the vent hole. If an impact force generated by a vehicle collision does not completely disappear even at t2, the dummy may continue to press against the airbag member and finally, the inflation gas may be completely discharged and the dummy 1 contacts a vehicle. As a result, at t3, the rib deformity degree increases to d3 and thus a vehicle occupant is highly likely to be injured.

As described above, when only a vent hole is formed in an airbag member without separate control members, the potential of injury to vehicle occupants caused by collision with the completely inflated airbag member can be reduced, but if an inflation gas is excessively discharged, the potential of injury to vehicle occupants may be increased.

The prior art in US 2004/0012179 A1 discloses an airbag unit comprising a gas generator, an airbag member that is inflatable by the gas generator and comprises two vent holes in the sides of the airbag member, blocking members that partially block the vent holes of the airbag member being deployed inside or outside the airbag member and a plurality of tethers connecting the blocking member to the airbag member. According to US 2004/0012179 A1, the operative lengths of the tethers maybe shortened by drawing a portion of the tethers towards an anchoring structure remote from the airbag cushion. Such a shortening in the operative lengths of the tethers causes the depth of the airbag cushion to be restrained. The tethers may furthermore be released from the anchoring position, whereby the operative lengths of the tethers is increased, thus, permitting the inflatable airbag member to assume an expanded profile or enhanced depths. This expended profile or enhanced depth is desirable if the physical character and orientation of the occupant in combination with the nature of the impact require an according inflation profile of the airbag member. Furthermore, according to US 2004/0012179 A1, the release of the tethers from the anchoring position also causes further parts of the tethers to activate the vent holes in the sides of the airbag member. Thereby, the vent holes may either be opened or closed, in order to influence the inflation and or deflation characteristic of the airbag member.

### Technical Problem

The present invention provides an airbag unit providing a high level of safety.

The present invention also provides an airbag unit capable of controlling discharge of an inflation gas.

The present invention also provides an airbag unit including a blocking member capable of controllably and partially blocking a vent hole.

### Solution to Problem

According to an aspect of the present invention, there is provided an airbag unit comprising:

a gas generator;

an airbag member that is inflatable by the gas generator and comprises a vent hole in one side of the airbag member;

a blocking member that partially blocks the vent hole of the airbag member and is deployed inside the airbag member;

a plurality of tethers connecting the blocking member to the airbag member;

the plurality of tethers comprise first through third tethers, wherein the first connects one side of the blocking member to an inner surface of the airbag member, the second tether connects a central point of the blocking member to a central point of the third tether; and

the ends of the third tether being fixed to the inner surface of the airbag member in such a way that when the airbag member is fully inflated and a vehicle occupant does not push the airbag member the third tether fully extends in a direction perpendicular to the direction in which an inflation gas flows towards the vent hole of the airbag member so that the blocking member does not block the vent hole and that when the occupant presses against the airbag member, thereby reducing the thickness of the airbag member compared with its full inflation, the third tether becomes bent and thus the second tether is moved towards the vent hole so that the blocking member fixed to the end of the second tether is moved closer to the vent hole and partially blocks the vent hole.

According to another aspect of the present invention, a distance (a) between a point at which the first tether is fixed to the inner surface of the airbag member and the vent hole is greater than a distance (b) between the point at which the first tether is fixed to the inner surface of the airbag member and the central point of the blocking member.

According to another aspect of the present invention, the blocking member is tetragonal.

According to another aspect of the present invention, the blocking member is tetragonal and the four corners of the blocking member are respectively connected by the four first tethers.

In an airbag unit according to the present invention, a vent hole formed in an airbag member is controllably blocked. By doing so, the potential for injury of a vehicle occupant can be minimized.

### Brief Description of Drawings

The above and other features and advantages of the present invention will become more apparent by describing in detail exemplary embodiments thereof with reference to the attached drawings in which:

FIG. 1 is a graph showing results of a test performed using a conventional side airbag unit;

FIG. 2 is a schematic sectional view of an airbag unit according to an embodiment of the present invention;

FIG. 3 is a schematic diagram for explaining a blocking member and first through third tethers of the airbag unit illustrated in FIG. 2, according to an embodiment of the present invention;

FIGS. 4 and 5 are schematic diagrams for explaining how the blocking member functions when an airbag member of the airbag unit illustrated in FIG. 2 inflates, according to an embodiment of the present invention; and

FIG.6 is a graph illustrating results of a test performed using the airbag unit illustrated in FIG. 2.

### Mode for the Invention

Hereinafter, embodiment of the present invention will be described in detail with reference to the attached drawings.

FIG. 2 is a schematic sectional view of an airbag unit 11 according to an embodiment of the present invention.

Referring to FIG. 2, a reference numeral 10 denotes a portion of a dummy that is used for pretending a vehicle occupant, and a reference numeral 20 denotes a side of a vehicle including the airbag unit 11. The airbag unit 11 includes an airbag member 21. A vent hole 21a is formed in one side of the airbag member 21. Although not illustrated in FIG. 2, a gas generator is included in the airbag unit 11 on a side of the 3 airbag member 21. The gas generator (not shown) generates an inflation gas and the airbag member 21 may be inflated by the inflation gas.

According to an embodiment of the present invention, a blocking member 22 is provided to controllably block the vent hole 21a of the airbag member 21. Referring to FIG. 2, the blocking member 22 is deployed in such a way that during inflation, the blocking member 22 is arranged inside the airbag member 21 to face the vent hole 21 a. The blocking member 22 is fixed with first through third tethers 23a, 23b, and 23c.

The first through third tethers 23a, 23b, and 23c extend between predetermined points of the blocking member 22 and predetermined points of an inner surface of the airbag member 21. The first through third tethers 23a, 23b, and 23c may be fixed to the blocking member 22 and the airbag member 21 by stitching. Referring to FIG. 2, a reference numeral 25 denotes points at which the first tether 23a is fixed to the airbag member 21, and a reference numeral 26 denotes points at which the first tether 23a is fixed to the blocking member 22. A reference numeral 27 denotes a point at which the second tether 23b is fixed to the blocking member 22, that is, a central point of the blocking member 22, and a reference numeral 28 denotes a point at which the second tether 23b is fixed to the third tether 23c. A reference numeral 29 denotes points at which ends of the third tether 23c are fixed to the blocking member 22.

FIG. 3 is a schematic diagram for explaining the blocking member, 22 and the first through third tethers 23a, 23b, and 23c illustrated in FIG. 2.

Referring to FIG. 3, the blocking member 22 may be formed of fabric, and the first through third tethers 23a, 23b, and 23c are used to fix the blocking member 22 to the airbag member 21. In the embodiment illustrated in FIG. 3, the blocking member 22 is tetragonal and is connected to the first tether 23a at a corner 26 of the blocking member 22. In this case, four first tethers 23a are provided. An end of the second tether 23b is connected to the central point 27 of the blocking member 22. Another end of the second tether 23b connected to the central point 27 of the blocking member 22 is connected to a central point of the third tether 23c. Ends of the first through third tethers 23a, 23b, and 23c are, as illustrated in FIG. 2, fixed to the inner surface of the airbag member 21.

Although the blocking member 22 illustrated in FIG. 3 is tetragonal, the shape of the blocking member 22 is not limited thereto. For example, the blocking member 22 may be, for example, triangular, pentagonal, hexagonal, or circular. In addition, the first tether 23a may comprise two or more tethers. For example, if the blocking member 22 is circular, two first tethers 23a may be fixed to two points separated by an angle of 180° on a circumference of the circular blocking member 22, respectively. Even when the blocking member 22 has other shapes, each of the first tethers 23a fixed may consist of two or more tethers.

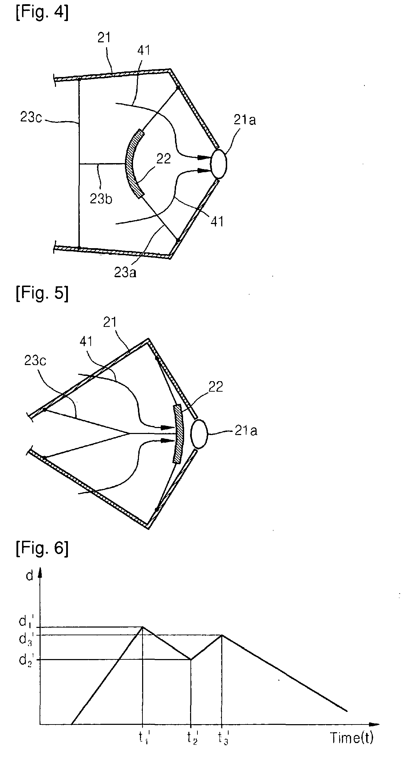

FIGS. 4 and 5 are schematic diagrams for explaining how the blocking member 22 functions when the airbag member 21 inflates.

FIG. 4 is a schematic diagram illustrating a state in which the airbag unit 11 inflates. Referring to FIG. 4, the airbag member 21 is fully inflated by an inflation gas generated by a gas generator (not shown). In this case, the blocking member 22 is separated from the vent hole 21a by a predetermined distance, and thus, the blocking member 22 does not prevent the inflation gas from being discharged through the vent hole 21 a. A reference numeral 41 denotes a flow of the inflation gas, and due to the gas flow 41, while the airbag member 21 may be fully inflated, a portion of the inflation gas may be discharged through the vent hole 21a.

The blocking member 22 does not block the vent hole 21a because the blocking member 22 is separated from the vent hole 21a by the second tether 23b extending from the central point of the blocking member 22 and the third tether 23c connected to the second tether 23b. That is, when the airbag member 21 initially inflates, a vehicle occupant does not yet push the airbag member 21 and thus, the airbag member 21 may be fully inflated. In this case, the third tether 23c fully extends in a thickness direction of the airbag member 21 corresponding to a distance between the side of the vehicle and the vehicle occupant. That is, as illustrated in FIG. 4, the third tether 23c fully extends in a direction perpendicular to a direction of the gas flow 41 towards the vent hole 21a, and the third tether 23c is almost straight. Accordingly, the third tether 23c pulls the second tether 23b and thus the blocking member 22 is separated from the vent hole 21a.

FIG. 5 is a schematic diagram illustrating a state in which the vehicle occupant pushes the inflated airbag member 21. The vehicle occupant pushes the airbag member 21 in reaction to an impact force generated when the vehicle collides. Thus, the thickness of the airbag member 21 is reduced compared to when fully inflated. That is, the thickness of the airbag member 21 that is once inflated is reduced and the third tether 23c becomes bent as illustrated in FIG. 5, and thus the second tether 23b is moved towards the vent hole 21a. Thus, the blocking member 22 fixed to the end of the second tether 23b is moved closer to the vent hole 21a. As a result, the blocking member 22 may appropriately block the vent hole 21a depending on the lengths of the first through third tethers 23a, 23b, and 23c.

Referring to FIG. 2, 'a' denotes a distance between the point 25 at which the first tether 23a is fixed to the inner surface of the airbag member 21 and the central point 27 of the blocking member 22, and 'b' denotes a distance between the point 25 at which the first tether 23a is fixed to the inner surface of the airbag member 21 and the vent hole 21a. The distance 'b' between the point 25 and the vent hole 21a may be greater than the distance 'a' between the point 25 and the central point 27 of the blocking member 22 (a < b). The length of the first tether 23a may be adjusted to satisfy this condition and according to the length of the first tether 23a, lengths of the second tether 23b and the third tether 23c may be determined. By controlling the distance 'b' between the point 25 and the vent hole 21a to be greater than the distance 'a' between the point 25 and the central point 27 of the blocking member 22, the blocking member 22 may not completely block the vent hole 21a at an inappropriate time. That is, the inflation gas needs to be sufficiently and appropriately discharged when the weight of the vehicle occupant is applied to the airbag member 21. However, if the vent hole 21a is blocked by the blocking member 22 when the vehicle occupant forcibly collides with the inflated airbag member 21, the vehicle occupant may be injured. Thus, when the condition of a < b is satisfied, the complete blocking by the blocking member 22 may be prevented.

FIG. 6 is a graph illustrating results of a test performed using the airbag unit 11 illustrated in FIGS. 2 through 5. In FIG. 6, the x-axis represents time and the y-axis represents a rib deformity degree when pressure is applied to a vehicle occupant (dummy).

Referring to FIG. 6, at t1' after the airbag member 21 begins to inflate, the airbag member 21 is fully inflated and the inflated airbag member 21 pushes the vehicle occupant and thus, the rib deformity degree increases to d1'. Then, an inflation gas is discharged through the vent hole 21a formed in the airbag member 21 and thus, the airbag member 21 applies less pressure to the vehicle occupant. At t2', the rib deformity degree is reduced to d2'. After t2', as described above, the vent hole 21a is partially blocked by the blocking member 22. Until t3', the inflation gas remains in the airbag member 21 and thus, although the rib deformity degree increases to d3', the difference between d2' and d3' is not significant. Thus, until the impact force due to collision of the vehicle completely disappears, the rib deformity degree does not increase any more and thus the potential for injury of the vehicle occupant is reduced.

In an airbag unit according to the present invention, a vent hole formed in an airbag member is controllably blocked. By doing so, the potential for injury of a vehicle occupant can be minimized.

## Claims

1. An airbag unit (11) comprising:
a gas generator;
an airbag member (21) that is inflatable by the gas generator and comprises
a vent hole (21a) in one side of the airbag member;
a blocking member (22) that partially blocks the vent hole (21a) of the airbag member (21) and is deployed inside the airbag member; and
a plurality of tethers (23a, b, c) connecting the blocking member (22) to the airbag member (21),
**characterized in that**
the plurality of tethers comprise first through third tethers (23a, b, c), wherein the first (23a) connects one side of the blocking member (22) to an inner surface of the airbag member (21),
the second tether (23b) connects a central point (27) of the blocking member (22) to a central point (28) of the third tether (23c),
the ends of the third tether (23c) being fixed to the inner surface of the airbag member (21) in such a way that when the airbag member (21) is fully inflated and a vehicle occupant does not push the airbag member (21) the third tether (23c) fully extends in a direction perpendicular to the direction in which an inflation gas flows towards the vent hole (21a) of the airbag member (21) so that the blocking member (22) does not block the vent hole (21a)
and that when the occupant presses against the airbag member (21), thereby reducing the thickness of the airbag member (21) compared with its full inflation
the third tether (23c) becomes bent and thus the second tether (23) is moved towards the vent hole (21a)
so that the blocking member (22) fixed to the end of the second tether (23b) is moved closer to the vent hole (21a) and partially blocks the vent hole (21a).

2. The airbag unit according to claim 1, characterized, that a distance (a) between a point at which the first tether (23a) is fixed to the inner surface of the airbag member (21) and the vent hole (21a) is greater than a distance (b) between the point (25) at which the first tether (23a) is fixed to the inner surface of the airbag member (21) and the central point (27) of the blocking member (22).

3. The airbag unit according to claim 1 or 2, **characterized in that** the blocking member (22) is tetragonal.

4. The airbag unit according to claim 1 or 2, **characterized in that** the blocking member (22) is tetragonal and the four corners (26) of the blocking member (22) are respectively connected by the four first tethers (23 a).

## Patentansprüche

1. Airbageinheit (11), umfassend:
einen Gasgenerator;
ein Airbagelement (21), das durch den Gasgenerator aufblasbar ist und Folgendes umfasst:
ein Entlüftungsloch (21 a) in einer Seite des Airbagelements;
ein Sperrelement (22), das das Entlüftungsloch (21 a) des Airbagelements (21) teilweise versperrt und in dem Airbagelement ausgebreitet ist; und
eine Vielzahl von Haltevorrichtungen (23a, b, c), die das Sperrelement (22) mit dem Airbagelement (21) verbinden,
**dadurch gekennzeichnet, dass**
die Vielzahl von Haltevorrichtungen eine erste bis dritte Haltevorrichtung (23a, b, c) umfasst, wobei die erste (23a) eine Seite des Sperrelements (22) mit einer Innenfläche des Airbagelements (21) verbindet,
die zweite Haltevorrichtung (23b) einen Mittelpunkt (27) des Sperrelements (22) mit einem Mittelpunkt (28) der dritten Haltevorrichtung (23c) verbindet,
wobei die Enden der dritten Haltevorrichtung (23c) an der Innenfläche des Airbagelements (21) derart befestigt sind, dass, wenn das Airbagelement (21) vollständig aufgeblasen ist und ein Fahrzeuginsasse nicht auf das Airbagelement (21) drückt, die dritte Haltevorrichtung (23c) vollständig in eine Richtung senkrecht zu der Richtung verläuft, in der ein Füllgas in Richtung des Entlüftungslochs (21 a) des Airbagelements (21) strömt, sodass das Sperrelement (22) das Entlüftungsloch (21 a) nicht versperrt
und dass wenn der Insasse gegen das Airbagelement (21) drückt, wodurch die Dicke des Airbagelements (21) im Vergleich zu seinem vollständig aufgeblasenen Zustand verringert wird,
die dritte Haltevorrichtung (23c) gebogen wird und somit die zweite Haltevorrichtung (23) in Richtung des Entlüftungslochs (21 a) bewegt wird,
sodass das am Ende der zweiten Haltevorrichtung (23b) befestigte Sperrelement (22) näher an das Entlüftungsloch (21 a) bewegt wird und das Entlüftungsloch (21 a) teilweise versperrt.

2. Airbageinheit nach Anspruch 1, **dadurch gekennzeichnet, dass** ein Abstand (a) zwischen einem Punkt, an dem die erste Haltevorrichtung (23a) an der Innenfläche des Airbagelements (21) befestigt ist, und dem Entlüftungsloch (21 a) größer ist als ein Abstand (b) zwischen dem Punkt (25), an dem die erste Haltevorrichtung (23a) an der Innenfläche des Airbagelements (21) befestigt ist, und dem Mittelpunkt (27) des Sperrelements (22).

3. Airbageinheit nach Anspruch 1 oder 2, **dadurch gekennzeichnet, dass** das Sperrelement (22) viereckig ist.

4. Airbageinheit nach Anspruch 1 oder 2, **dadurch gekennzeichnet, dass** das Sperrelement (22) viereckig ist und die vier Ecken (26) des Sperrelements (22) jeweils über die vier ersten Haltevorrichtungen (23a) verbunden sind.

## Revendications

1. Unité de coussin de sécurité gonflable (11) comprenant :
un générateur de gaz ;
un élément de coussin de sécurité gonflable (21) qui est gonflable par le générateur de gaz et comprend
un trou d'évent (21 a) dans un côté de l'élément de coussin de sécurité gonflable ;
un élément de blocage (22) qui bloque partiellement le trou d'évent (21 a) de l'élément de coussin de sécurité gonflable (21) et est déployé à l'intérieur de l'élément de coussin de sécurité gonflable ; et
une pluralité d'attaches (23a, b, c) reliant l'élément de blocage (22) à l'élément de coussin de sécurité gonflable (21),
**caractérisée en ce que**
la pluralité d'attaches comprend des première à troisième attaches (23a, b, c), dans laquelle la première (23a) relie un côté de l'élément de blocage (22) à une surface intérieure de l'élément de coussin de sécurité gonflable (21),
la seconde attache (23b) relie un point central (27) de l'élément de blocage (22) à un point central (28) de la troisième attache (23c),
les extrémités de la troisième attache (23c) étant fixées à la surface intérieure de l'élément de coussin de sécurité gonflable (21) de telle manière que quand l'élément de coussin de sécurité gonflable (21) est complètement gonflé et qu'un occupant du véhicule ne pousse pas l'élément de coussin de sécurité gonflable (21), la troisième attache (23c) s'étend complètement dans une direction perpendiculaire à la direction dans laquelle un gaz de gonflage circule vers le trou d'évent (21 a) de l'élément de coussin de sécurité gonflable (21) de sorte que l'élément de blocage (22) ne bloque pas le trou d'évent (21 a) et **en ce que** quand l'occupant appuie contre l'élément de coussin de sécurité gonflable (21), réduisant ainsi l'épaisseur de l'élément de coussin de sécurité gonflable (21) par rapport à son état complètement gonflé
la troisième attache (23c) devient courbée et la seconde attache (23) est ainsi déplacée vers le trou d'évent (21 a)
de sorte que l'élément de blocage (22) fixé à l'extrémité de la seconde attache (23b) est déplacé plus près du trou d'évent (21 a) et bloque partiellement le trou d'évent (21 a).

2. Unité de coussin de sécurité gonflable selon la revendication 1, **caractérisée en ce qu'**une distance (a) entre un point auquel la première attache (23a) est fixée à la surface intérieure de l'élément de coussin de sécurité gonflable (21) et le trou d'évent (21 a) est supérieure à une distance (b) entre le point (25) auquel la première attache (23a) est fixée à la surface intérieure de l'élément de coussin de sécurité gonflable (21) et le point central (27) de l'élément de blocage (22).

3. Unité de coussin de sécurité gonflable selon la revendication 1 ou 2, **caractérisée en ce que** l'élément de blocage (22) est quadrangulaire.

4. Unité de coussin de sécurité gonflable selon la revendication 1 ou 2, **caractérisée en ce que** l'élément de blocage (22) est quadrangulaire et les quatre coins (26) de l'élément de blocage (22) sont reliés respectivement par les quatre premières attaches (23a).
